# EUROPÄISCHE PATENTSCHRIFT

(11) **EP 0 597 457 B1**
(45) Veröffentlichungstag und Bekanntmachung des Hinweises auf die Patenterteilung: **28.05.1997**
(21) Anmeldenummer: 93118211.7
(22) Anmeldetag: 10.11.1993
(51) Int. Cl.: G07C 1/00, G06K 19/077

(54) **Vorrichtung zur Überwachung der Laufzeit von Postsendungen**
Mail dispatch time monitoring device
Dispositif pour surveiller le délai d'acheminement du courrier

(30) Priorität: 12.11.1992 DE 4238102
(43) Veröffentlichungstag der Anmeldung: 18.05.1994
(73) Patentinhaber: AEG Postautomation GmbH, 12681 Berlin (DE)
(72) Erfinder: Berlin, Bernhard, Dipl.-Ing., D-10319 Berlin (DE); Rebel, Burghard, Prof. Dr., D-13187 Berlin (DE); Berends, Andreas, Dr., D-10405 Berlin (DE); von Poeppinghausen, Eberhard, Dipl.-Ing., D-10117 Berlin (DE)
(74) Vertreter: Vogl, Leo, Dipl.-Ing.

(56) Entgegenhaltungen:
- EP-A- 0 512 543
- DE-A- 4 107 198
- US-A- 5 072 400
- US-A- 5 135 842
- GALVANOTECHNIK, Bd. 77, Nr. 4, April 1986 SAULGAU/WURTT DE, Seiten 929-932, ROTH 'Anwendung und Herstellung flexibler und starr-flexibler Schaltungen'

## Beschreibung

Die Erfindung betrifft eine Vorrichtung zur Überwachung der Laufzeit von Postsendungen gemäß dem Oberbegriff des Anspruchs 1.

Es ist üblich, zur Kontrolle der Laufzeit von Postsendungen sogenannte Laufzeitprüfgeräte einzusetzen, die mit den zu transportierenden Postsendungen aufgegeben werden und Vorrichtungen aufweisen, durch die der Bewegungsablauf der Postsendungen registriert wird. Die bisher verwandten Vorrichtungen dieser Art beinhalten einen Bewegungssensor, der über die gesamte Versandzeit der Sendung die Bewegung registriert. Die beim Transport der Postsendungen auftretenden Kräfte wirken auf den Sensor ein und die durch den Sensor ermittelten Werte werden in einem Bewegungszeitdiagramm festgehalten. ist die Sendung in Ruhe, d. h. erfolgt kein Transport, erfolgen durch den Sensor auch keine Aufzeichnungen. Mit dieser Methode kann festgestellt werden, ob die Sendung z. B. nach mehrstündigem Transport mehrere Tage in unzulässiger Weise in völliger Ruhe gelegen hat.

Das durch das Laufzeitprüfgerät aufgezeichnete Bewegungszeitdiagramm kann in einer zentralen Stelle ausgewertet werden und durch einen Soll/Ist-Vergleich ist es möglich, eventuelle Stops in der Auslieferung oder Versendung zu lokalisieren, da die Transportwege und Transportzeiten für den Regelfall bekannt sind.

Die bisher eingesetzten Laufzeitprüfgeräte weisen den Nachteil auf, daß ihre Dicke ca. 3 cm beträgt und sie in Form eines Päckchens als starre Einheit ausgebildet sind.

Der Erfindung liegt nun die Aufgabe zugrunde, eine Vorrichtung für ein Laufzeitüberwachungsgerät zu schaffen, die in der Dicke der üblichen Briefdicke von ≤ 5 mm entspricht und ebenso das Briefformat, das sogenannte C6 Format, aufweist. Außerdem soll der Brief so ausgebildet werden, daß er in Briefsortiermaschinen verarbeitet werden kann und bei der Steifigkeitsmessung in den Briefbearbeitungsmaschinen in den Postämtern nicht ausgesondert wird.

Gemäß der Erfindung wird dies durch die im Kennzeichen des Anspruchs 1 angegebenen Merkmale erreicht.

Die erfindungsgemäße Vorrichtung zur Überwachung der Laufzeit von Postsendungen weist durch die Verbindung starrer Leiterkartenteile mit flexiblen Teilen die Möglichkeit der Sortierung durch die üblichen Briefverteilmaschinen auf. Ferner ist, wie in den Unteransprüchen angegeben, durch die Abdeckung mit elastischen Teilen und den Überzug der Leiter und Baugruppen mit einer Vergußmasse und den Einschluß in einer Folie eine Beschädigung der Vorrichtung durch Maschinensortierung vollkommen ausgeschlossen.

Eine Ausführungsform der erfindungsgemäßen Vorrichtung ist in der nachfolgenden Beschreibung der beliegenden Zeichnung dargelegt.
- Fig. 1: zeigt eine erfindungsgemäße Vorrichtung in Draufsicht in Anordnung innerhalb eines Briefumschlages,
- Fig. 2: die Anordnung der Schutzabdeckungen auf der Leiterkarte,
- Fig. 3: die Anordnung der Bauelemente auf den starren Teilen der Leiterkarte.

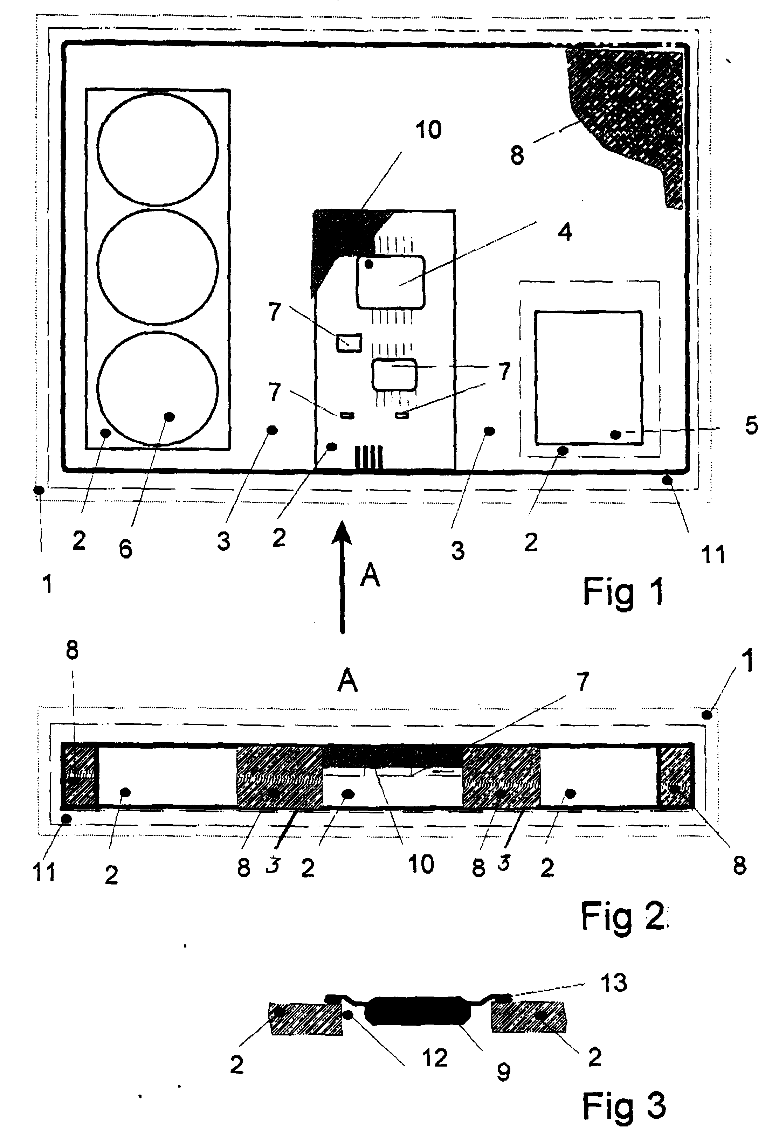

In Fig. 1 ist mit 1 die äußere Umrandung eines Briefumschlages bezeichnet, in dem eine Leiterkarte angeordnet ist. Die Vorrichtung weist starre Flächen 2 und flexible Teile 3 auf. Bewegungssensor 5, Speicher für Meßwerte und Auswerteelektronik sind auf einer teilflexiblen Unterlage angeordnet. Auf den beiden äußeren starren Leiterkartenteilen 2 ist die Stromversorgung 6 sowie ein Bewegungssensor 5 angeordnet. Der mittlere starre Teil 2 der Leiterkarte trägt einen Mikrokontroller 4 sowie andere Bauelemente 7.

Gemäß der Erfindung sind die starren Teile 2 der Vorrichtung durch flexible Teile 3 verbunden. Diese flexiblen Teile 3 erstrecken sich über die gesamte Breite der Leiterkarte, um die Beweglichkeit der Postsendungen zu gewährleisten.

Wie in Fig. 2 dargestellt, sind diese flexiblen Teile 3 mit einer weichen Abdeckung 8 versehen. Die neben dieser Abdeckung angeordneten starren Leiterplattenteile 2, die die Bauelemente 9 tragen, weisen auf ihrer Oberseite eine Vergußmasse 10 auf. Die Höhe der Vergußmasse 10 und der Abdeckung sind gleich, so daß sich eine geschlossene plane Fläche ergibt.

Die gesamte Anordnung ist mit einer Folie 11 umschlossen.

Die flexiblen Teile 3 können beliebig ausgebildet werden. Es ist lediglich dabei zu beachten, daß der Brief eine gewisse Steifigkeit aufweisen muß, um durch Briefverteilanlagen zu laufen. Die Steifigkeit darf aber nicht so groß sein, daß eine Aussonderung erfolgt.

In einer Ausführungsform sind die flexiblen Teile 3 als flexible Teile der Leiterkarte ausgebildet. In einer weiteren Ausführungsform sind die Teile 3 als flexible Folienunterlage ausgebildet. Die flexiblen Teile können gedruckte Schaltungen zur elektrischen Verbindung aufweisen.

In Fig. 3 ist die Anordnung der Bauelemente 9 in Vertiefungen 12 der starren Leiterplattenteile 2 dargestellt. Die Bauelemente 9 sind so angeordnet, daß sie mit ihren aufragenden Teilen die Vertiefungen 12 greifen und mit ihren Anschlußfahnen 13 an der Oberseite der starren Leiterplattenteile angelötet sind.

## Patentansprüche

1. Vorrichtung zur Überwachung der Laufzeit von Postsendungen mit einem Bewegungssensor (5), einem Speicher zum Erfassen der Meßwerte und einer Auswerteelektronik, **dadurch gekennzeichnet,** daß der Bewegungssensor, der Speicher für die Meßwerte und die Auswerteelektronik auf einer teilflexiblen Unterlage angeordnet sind, die derart ausgebildet ist, daß sie für die Anordnung des Bewegungssensors den Speicher für die Meßwerte und die werteelektronik, sowie die Stromversorgung starre terkartenteile (2) aufweist und diese starren Leiterkartenteile (2) durch flexible Teile (3) miteinander verbunden sind.

2. Vorrichtung nach Anspruch 1, dadurch gekennzeichnet, daß die Leiterkarte rechteckförmig ausgebildet ist und die flexiblen Teile (3) sich über die gesamte Länge oder Breite der Leiterkarte streifenförmig erstrecken.

3. Vorrichtung nach Anspruch 1 oder 2, dadurch gekennzeichnet, daß die flexiblen Teile (3) mit weicher Masse um die Baugruppen, auf den starren Leiterkartenteilen (2) mit einer Vergußmasse abgedeckt sind.

4. Vorrichtung nach Anspruch 1 oder den folgenden, dadurch gekennzeichnet, daß die starren Leiterkartenteile (2) Vertiefungen (12) für die Aufnahme von Bauelementen (9) aufweisen und die Bauelemente (9) derart angeordnet sind, daß die Bauelemente (9) in die Vertiefungen (12) ragen und die Anschlußfahnen (13) an der Oberseite der Leiterplatte verlötet sind.

5. Vorrichtung nach einem der Ansprüche 1 oder den folgenden, dadurch gekennzeichnet, daß die Vorrichtung von einer Folie umschlossen ist.

6. Vorichtung nach Anspruch 1 oder den fogenden, dadurch gekennzeichnet, daß die flexiblen Teile (3) als flexible Teile der Leiterkarte ausgebildet sind.

7. Vorrichtung nach Anspruch 1 oder den folgenden, dadurch gekennzeichnet, daß die flexiblen Teile (3) gedruckte Schaltungen aufweisen.

8. Vorrichtung nach den Ansprüchen 1 bis 5, dadurch gekennzeichnet, daß die flexiblen Teile (3) als flexible Folienunterlage ausgebildet sind.

## Claims

1. Device for monitoring the transit time of items of mail, comprising a movement sensor (5), a store for detection of the measurement values and an electronic evaluating system, characterised thereby that the movement sensor, the store for the measurement values and the electronic evaluating system are arranged on a partially flexible support which is constructed in such a manner that it has rigid circuitboard parts (2) for the arrangement of the movement sensor, the store for the measurement values and the electronic evaluating system as well as the current supply and these rigid circuitboard parts (2) are connected together by flexible parts (3).

2. Device according to claim 1, characterised thereby that the circuitboard is formed to be rectangular and the flexible parts (3) extend in strip shape over the entire length or width of the circuitboard.

3. Device according to claim 1 or 2, characterised thereby that the flexible parts (3) are covered by soft material, the components on the rigid circuitboard parts (2) by a casting material.

4. Device according to claim 1 or the following, characterised thereby that the rigid circuitboard parts (2) have recesses (12) for receiving components (9) and the components (9) are arranged in such a manner that the components (9) project into the recesses (12) and the terminal lugs (13) are soldered at the upper side of the circuitboard.

5. Device according to claim 1 or the following, characterised thereby that the device is enclosed by a foil.

6. Device according to claim 1 or the following, characterised thereby that the flexible parts (3) are formed as flexible parts of the circuitboard.

7. Device according to claim 1 or the following, characterised thereby that the flexible parts (3) are printed circuits.

8. Device according to claims 1 to 5, characterised thereby that the flexible parts (3) are formed as a flexible foil support.

## Revendications

1. Appareil pour surveiller le temps d'acheminement de courrier, comprenant un détecteur de déplacement (5), une mémoire pour saisir les valeurs de mesure, un système électronique d'évaluation, caractérisé en ce que le détecteur de déplacement, la mémoire pour les valeurs de mesure, et le système électronique d'évaluation sont agencés sur un substrat partiellement flexible, qui est réalisé de manière à présenter des parties de cartes à circuits imprimés rigides pour agencer le détecteur de déplacement, la mémoire pour les valeurs de mesure, et le système électronique d'évaluation, ainsi que l'alimentation électrique, et en ce que ces parties de cartes rigides (2) sont reliées les unes aux autres par des parties flexibles (3).

2. Appareil selon la revendication 1, caractérisé en ce que la carte à circuits imprimés est réalisée sous forme rectangulaire, et en ce que les parties flexibles (3) s'étendent sous forme de bandes sur la longueur totale ou la largeur totale de la carte à circuits imprimés.

3. Appareil selon l'une ou l'autre des revendications 1 et 2, caractérisé en ce que les parties flexibles (3) sont recouvertes d'une masse souple, et en ce que les composants sur les parties de cartes rigides (2) sont recouverts d'une masse coulée.

4. Appareil selon la revendication 1 ou les suivantes, caractérisé en ce que les parties de cartes rigides (2) présentent des renfoncements (12) pour la réception de composants (9), et en ce que les composants (9) sont agencés de telle manière qu'ils pénètrent dans les renfoncements (12), et que les pattes de raccordement (13) sont soudées sur la surface de la plaque à circuits imprimés.

5. Appareil selon l'une des revendications 1 ou les suivantes, caractérisé en ce que le dispositif est entouré par une feuille.

6. Appareil selon la revendication 1 ou les suivantes, caractérisé en ce que les parties flexibles (3) sont réalisées sous forme de parties flexibles de la carte à circuits imprimés.

7. Appareil selon la revendicatiun 1 ou les suivantes, caractérisé en ce que les parties flexibles (3) comportent des circuits imprimés.

8. Appareil selon les revendications 1 à 5, caractérisé en ce que les parties flexibles (3) sont réalisées sous forme d'un substrat flexible en forme de feuille.
